# EUROPÄISCHE PATENTSCHRIFT

(11) **EP 2 135 336 B1**
(45) Veröffentlichungstag und Bekanntmachung des Hinweises auf die Patenterteilung: **26.11.2014**
(21) Anmeldenummer: 08718345.5
(22) Anmeldetag: 31.03.2008
(51) Int. Cl.: H02B 1/36

(54) **GERÄTEEINSCHUB SOWIE SCHALTSCHRANK MIT EINER VIELZAHL VON GERÄTEEINSCHÜBEN**
MODULE RACK AND CONTROL BOX HAVING A PLURALITY OF MODULE RACKS
TIROIR ENFICHABLE ET ARMOIRE ÉLECTRIQUE POURVUE D'UNE PLURALITÉ DE TIROIRS ENFICHABLES

(30) Priorität: 10.04.2007 DE 102007017463
(43) Veröffentlichungstag der Anmeldung: 23.12.2009
(73) Patentinhaber: Siemens Aktiengesellschaft, 80333 München (DE)
(72) Erfinder: FRÖHLICH, Tom, 01257 Dresden (DE); SCHMIDT, Mario, 04178 Leipzig (DE)
(86) Internationale Anmeldenummer: PCT/EP2008/053788
(87) Internationale Veröffentlichungsnummer: WO 2008/122533

(56) Entgegenhaltungen:
- DE-A1- 10 216 594
- DE-A1- 19 948 697
- DE-C1- 10 204 226

## Beschreibung

Die Erfindung betrifft einen Geräteeinschub für ein elektrisches Schaltfeld, wie z.B. für eine Niederspannungs-Schaltanlage oder für einen Schaltschrank. Der Geräteeinschub weist eine Grundplatte, eine Frontseite sowie eine Rückwand auf. Er weist weiterhin ein mittels einer ersten Verfahrmechanik relativ zur Grundplatte in Einschubrichtung verschiebbares System zum Verfahren von Trennkontakten für die Energiezuleitung auf. Im Einschubgehäuse ist ein mittels eines Bedienelementes im Bereich der Frontseite betätigbarer Hauptschalter angeordnet. Im Bereich der Frontseite ist eine Zugangsöffnung zum Einstecken eines Betätigungswerkzeuges oder eines Hilfswerkzeuges zum Verfahren des Trennkontaktsystems in eine Trenn-oder Betriebsstellung angeordnet. Das Betätigungswerkzeug ist bei eingeschaltetem Hauptschalter nicht in die Zugangsöffnung einsteckbar. Zugleich ist der Hauptschalter bei eingestecktem Betätigungswerkzeug nicht einschaltbar. Der Geräteeinschub weist weiterhin einen mittels einer zweiten Verfahrmechanik in eine Test- oder Trennstellung verfahrbaren Steuerstecker auf. Er weist ein im Einschubgehäuse angeordnetes zweiteiliges, über die Zugangsöffnung mittels eines Betätigungswerkzeuges betätigbares Betätigungselement auf. Das erste Teil ist mit der ersten Verfahrmechanik verbunden. Das zweite Teil ist mit der zweiten Verfahrmechanik verbunden. Beide Teile sind über das erste Betätigungswerkzeug gemeinsam betätigbar. Das zweite Betätigungswerkzeug ist nur über das zweite Teil betätigbar.

Aus der deutschen Offenlegungsschrift DE 199 48 697 A1 ist ein Geräteeinschub für Schaltanlagen bekannt. Der Geräteeinschub weist eine Grundplatte und einen daran verschiebbar geführten Geräteträger auf. Eine Rasteinrichtung umfasst beidseitig vorn an der Grundplatte angebrachte schwenkbare Rasthaken, welche eine Entnahme des Geräteeinschubs nur in der Trennstellung des Geräteeinschubs zulassen. Ein Mutterstück für eine Gewindespindel ist frontseitig an der Grundplatte angeordnet. Ein Hilfstrennkontaktblock ist durch einen vorn am Geräteeinschub bedienbaren Schieber zu betätigen. Als Schutz gegen eine Gefahr bringende Bedienung des Geräteeinschubes ist ein Verriegelungsschieber mit einer Kulissensteuerung vorgesehen. Hierdurch wird erreicht, dass der Verriegelungsschieber nur in der Trennstellung zur Freigabe des Zugangs zur Gewindespindel betätigt werden kann. Der Verriegelungsschieber ist in der Verschlussstellung vorgespannt, von Hand bedienbar und quer zur Einschubrichtung am Geräteträger bewegbar geführt. Er ist weiterhin in Abhängigkeit von der Schaltstellung eines auf dem Geräteträger montierten Hauptschalters blockierbar bzw. freigebbar.

Aus der deutschen Patentschrift DE 102 16 594 A1 ist eine Einschubkassette zum Einschieben in dafür vorgesehene Schächte des Schaltschranks bekannt. Der Schaltschrank weist einen Rahmen und eine erste Verriegelungsanordnung zum Fixieren des Rahmens in einem Schacht des Schaltschranks auf. Der Rahmen umfasst eine Frontplatte, die zwei Betätigungselemente für die Betätigung der ersten Verriegelungsanordnung aufweist. Zum Bewegung einer Anschlusseinheit ist eine Bewegungsvorrichtung vorgesehen, die mit der ersten Verriegelungsanordnung so zusammenwirkt, dass sie nur betätigbar ist, wenn die erste Verriegelungsanordnung in der Verriegelungsposition ist. Die Frontplatte weist eine Öffnung zum Einstecken eines Antriebsschlüssels zum Bewegen der Anschlusseinheiten auf. Im nicht verriegelten Zustand der ersten Verriegelungsanordnung versperrt ein mit dieser mechanisch in Verbindung stehender Schiebebolzen die Öffnung. Ein eingesteckter Antriebsschlüssel greift durch die Öffnung in einen zweiteiligen Betätigungszylinder, an dessen Umfang Zahnräder angeordnet sind, die wiederum in Zahnstangen und Zahnscheiben eingreifen. Über diese können mit den Anschlusseinheiten in Verbindung stehende Geräteanordnungen betätigt werden. Der erste Teil des Betätigungszylinders dient zur Betätigung der Anschlusseinheit für Steuerkontakte, der zweite Teil zur Betätigung der Leistungsanschlusseinheit. Mittels eines ersten Antriebsschlüssels mit kurzer Einschublänge ist nur die Anschlusseinheit für Steuerkontakte betätigbar. Mittels eines zweiten Antriebsschlüssels mit längerer Einschublänge sind beide Anschlusseinheiten betätigbar. Eine zweite Verriegelungsanordnung weist einen Verriegelungsschieber auf, der mit dem ersten Teil des Betätigungszylinders verbunden ist, so dass in jedem Fall, wenn eine Anschlusseinheit in die Betriebsstellung gefahren wird, der Verriegelungsschieber die erste Verriegelungsanordnung verriegelt. Eine dritte Verriegelungsanordnung bewirkt, dass die Öffnung blockiert ist, wenn der Hauptschalter eingeschaltet ist. In diesem Fall ist es deshalb nicht möglich, die Stellung der Anschlusseinheit für Steuerkontakte und die Leistungsanschlusseinheit zu verändern.

Aus der deutschen Patentschrift DE 101 20 737 C1 ist eine Niederspannungs-Schaltanlage bekannt. Die Schaltanlage weist einen Geräteeinschub zur Aufnahme von Geräten der Schalt-, Steuer- und Schutztechnik auf. In einem Einschubgehäuse des Geräteeinschubes ist quer zur Richtung der Verschiebung ein Verriegelungsbalken mit seitlich abragenden Riegelnasen angeordnet. In seitlichen Abkantungen eines Fachbodens sind Positionskulissen angeordnet, mit denen die Riegelnasen zur Verriegelung des Geräteeinschubes in einer Betriebs-, Trenn- und Teststellung zusammenwirken. Zum Anheben des Verriegelungsbalkens in seine Arbeitsstellung dient ein Hubgestänge, das mittels eines an einer Bedienfront angeordneten Stellorgans betätigbar ist. Wird in der Trennstellung des Geräteeinschubes ein Hilfstrennkontakt geschlossen, so wird hierdurch die Teststellung herbeigeführt. Eine Sperrnase blockiert dabei den Verriegelungsbalken und damit die Verschiebung des Geräteeinschubes. Parallel zum Boden des Einschubgehäuses bzw. zum Fachboden ist eine mit dem Stellorgan verbundene Riegelplatte an Führungslaschen geführt. Auf der Betätigungswelle des Hauptschalters sitzt ein Sperrhebelsystem, das einen mit der Betätigungswelle verbundenen Schwenkhebel und eine mit diesem verbundene oder durch eine Kulisse gekoppelte, etwa rechtwinklig zum Fachboden stehende Riegelstange umfasst. In der Riegelplatte befindet sich eine Riegelöffnung, in welche die Riegelstange nur eingreifen kann, wenn sich das Stellorgan in seiner nicht betätigten Ruhestellung befindet. Im Fachboden befindet sich eine Öffnung, in welche die Riegelstange nur eingreifen kann, wenn sich der Geräteeinschub in seiner Betriebsstellung befindet. Daher kann der Hauptschalter nur in dieser Position der Riegelplatte eingeschaltet werden. Der Geräteeinschub ist hierdurch gegen eine Verschiebung gesichert.

Geräteeinschübe sowie Schaltschränke sind allgemein bekannt. Sie werden insbesondere bei industriellen Anlagen in vielfältiger Weise eingesetzt. Durch die Einschubtechnik können elektrische und elektronische Baugruppen einfach zusammengestellt werden. Ein Auswechseln solcher Geräteeinschübe ist auf einfache Weise möglich. Diese einfache Auswechselmöglichkeit bringt das Problem mit sich, dass auch ungeschultes oder unbefugtes Personal in die Lage versetzt wird, elektrische oder elektronische Baugruppen in den Geräteeinschüben auszuwechseln. Es sind daher insbesondere bei Geräteeinschüben für Hochstrom- oder Hochspannungsanwendungen hohe Sicherheitsanforderungen einzuhalten, um eine mögliche Schädigung der Komponenten eines Geräteeinschubs durch einen sich während des Herausziehens des Geräteeinschubs bildenden Störlichtbogen im laufenden Betrieb zu vermeiden.

Ausgehend von dem Stand der Technik ist es eine Aufgabe der Erfindung, einen Geräteeinschub anzugeben, welcher eine verringerte Anzahl von Bedienelementen und einen verringerten Montageaufwand aufweist, wobei die hohen Sicherheitsanforderungen weiterhin gewährleistet bleiben.

Es ist eine weitere Aufgabe der Erfindung, einen Schaltschrank mit einer Vielzahl derartiger Geräteeinschübe anzugeben.

Die Aufgabe der Erfindung wird mit einem Geräteeinschub mit den Merkmalen des Anspruchs 1 gelöst. Vorteilhafte Ausgestaltungen sind in den abhängigen Ansprüchen 2 bis 11 genannt. Im Anspruch 12 ist ein Schaltschrank angegeben, in welchem eine Vielzahl derartiger Geräteeinschübe entfernbar aufgenommen ist. In den Ansprüchen 13 und 14 sind vorteilhafte Ausgestaltungen des Schaltschrankes angegeben.

Erfindungsgemäß ist eine Aussparung im Bereich der Frontseite vorhanden, in welche eine Antriebseinheit mit dem zweiteiligen Betätigungselement und mit der in einem Frontteil der Antriebseinheit angeordneten Zugangsöffnung aufgenommen ist. Im Frontteil ist ein vorgespannter, quer zur Einschubrichtung beweglich geführter und die Zugangsöffnung verschließender Handschieber angeordnet, welcher derart mit dem Hauptschalter zusammenwirkt, dass der Handschieber bei eingeschaltetem Hauptschalter nicht in eine Geöffnet-Stellung verschiebbar ist. Der Hauptschalter ist zudem in der Geöffnet-Stellung des Handschiebers nicht einschaltbar.

Dadurch verringert sich vorteilhaft die Anzahl von Bedienelementen an der Frontplatte.

Gemäß einer Ausführungsform ist das Betätigungselement zylindrisch und in axialer Richtung zweiteilig ausgeführt. Diese Anordnung ermöglicht in einfacher Weise die separate mechanische Anbindung des Betätigungselementes an die erste und zweite Verfahrmechanik.

Vorzugsweise weisen die beiden Teile des Betätigungselementes eine tangentiale Außenverzahnung auf. Die Außenverzahnung des ersten Teils des Betätigungselementes ist mit zumindest einer Zahnstange und/oder Zahnscheibe zum Verfahren des Trennkontaktsystems in Einschubrichtung im Eingriff. Die Außenverzahnung des zweiten Teils des Betätigungselementes ist mit einer Verzahnung einer Steuerzahnstange und/oder Steuerzahnscheibe zum Verfahren des Steuersteckers im Eingriff.

Durch ein im Betätigungselement eingesetztes Betätigungswerkzeug wird ein vom Benutzer aufgebrachtes Drehmoment auf das Betätigungselement übertragen. Je nach verwendetem Betätigungswerkzeug wird das Drehmoment über die jeweilige Außenverzahnung auf die damit im Eingriff befindliche Zahnstange oder Zahnscheibe bzw. Zahnstangen oder Zahnscheiben übertragen. Die ineinander greifenden Verzahnungen gewährleisten vorteilhaft ein schlupfloses Verfahren des Trennkontaktsystems bzw. des Steuersteckers. Der Außendurchmesser des Betätigungselementes ist vorzugsweise derart bemessen, dass die erforderlichen Verfahrwege mittels der ersten und zweiten Verfahrmechanik zur Erreichen der Trenn-, Test- und Betriebsstellungen durch Drehung des Betätigungselementes bei einem vorgegebenen Drehwinkel sicher erreicht werden. Vorteilhafte Drehwinkel sind z.B. 90° oder 180°.

Anstelle von Zahnstangen oder Zahnscheiben können auch sogenannte Bowdenzüge oder auf Ketten basierende Verfahrmechaniken zum Verfahren des Trennkontaktsystems und/oder des Steuersteckers verwendet werden. Alternativ zur Drehung des Betätigungselementes ist auch ein schwenkbares Betätigungselement denkbar, dessen Schwenkachse quer zur Einschubrichtung und parallel zur Grundplatte nahe der Frontplatte verläuft.

Nach einer besonders vorteilhaften Ausführungsform ist die Außenverzahnung des ersten Teils des Betätigungselementes mit zwei im Einschubgehäuse quer zur Einschubrichtung und parallel zur Grundplatte beweglich gelagerten Zahnstangen im Eingriff. Die Zahnstangen greifen beim Verfahren des Trennkontaktsystems in die Betriebsstellung in ein schaltfeldseitiges Tragblech zum Verriegeln des Geräteeinschubs mit dem Schaltfeld. Dadurch wird vorteilhaft erreicht, dass der Geräteeinschub in der Betriebsstellung nicht aus dem Einschubfach entnommen werden kann. Auf diese Weise wird eine mögliche Bildung eines Störlichtbogens beim Aufbrechen eine Stromverbindung durch das Herausziehen des Geräteeinschubs wirksam verhindert.

Nach einer Ausführungsform ragen die Zahnstangen in der Betriebsstellung jeweils in eine Öffnung im schaltfeldseitigen Tragblech hindurch. Eine derartige sicherc Verrieglungsanordnung ist somit auf denkbare einfache Weise bewerkstelligbar.

Nach einer weiteren Ausführungsform ist der Handschieber mit einer quer zur Einschubrichtung und parallel zur Grundplatte beweglich angeordneten Riegelplatte mit einer Riegelöffnung verbunden. Der Hauptschalter weist eine Schaltwelle mit einem darauf sitzenden Schwenkhebel auf, welcher in eine Aussparung einer senkrecht angeordneten Riegelstange greift. Der Hauptschalter ist nur dann in der Verschlussstellung des Handschiebers einschaltbar, wenn ein unteres Endstück der Riegelstahge in die Riegelöffnung hineinragt. Dadurch wird wirksam verhindert, dass ein. Benutzer den Hauptschalter - möglicherweise unter Last - einschalten kann, solange die Zugangsöffnung zum Verfahren des Trennkontaktsystems sowie des Steuersteckers noch zugänglich ist, das heißt nicht versperrt ist. Erst wenn der Benutzer den Handschieber und die damit verbundene Riegelplatte wieder in die Verschlussstellung bringt bzw. den vorgespannten Handschieber zum Zurückfahren in die Verschlussstellung loslässt, wird die Zugangsöffnung abgedeckt und versperrt. Zugleich steht die Riegelplatte dem Endstück der Riegelstange nicht mehr "im Wege".

Nach einer Ausführungsform liegt die Riegelöffnung in der Verschlussstellung des Handschiebers einer korrespondierenden Tragblechöffnung gegenüber. Der Geräteeinschub ist dann mit dem Tragblech gegen ein Herausziehen entgegen der Einschubrichtung verriegelbar, wenn bei eingeschaltetem Hauptschalter das untere Endstück der Riegelstange durch die Riegel- und Tragblechöffnung hindurchgreift. Dadurch wird vorteilhaft erreicht, dass der Geräteeinschub bei eingeschaltetem Hauptschalter nicht aus dem Einschubfach herausgezogen werden kann.

Einer weiteren Ausführungsform zufolge ist zumindest ein Rasthebel in einer Seitenwand des Einschubgehäuses schwenkbar gelagert angeordnet. Der Rasthebel weist ein abgewinkeltes Endstück auf, welches beim Einschieben des Geräteeinschubs den Rasthebel anhebt. Im eingeschobenen Zustand ist der Geräteeinschub dann mit dem schaltfeldseitigen Tragblech verrastet. Dadurch ist der Geräteeinschub im Einschubfach fixierbar. Ein Verschieben des Geräteeinschubs durch die beim Kontaktieren der Trennkontakte mit den schaltfeldseitigen Stromschienen auftretenden Kontaktierungskräfte ist daher nicht möglich.

Vorzugsweise verläuft die Schwenkachse der Rasthebel senkrecht zur jeweiligen Seitenwandebene.

In einer besonders vorteilhaften Ausführungsform weist der Rasthebel eine Hebelöffnung auf. Der Rasthebel wirkt so mit der Zahnstange zusammen, dass ein Entriegeln des Rasthebels durch die in die Hebelöffnung in der Betriebsstellung hindurchragende Zahnstange verhinderbar ist. Dadurch wird ein Entriegeln der Rasthebel in der Betriebsstellung, wie z.B. mittels eines Schraubendrehers, wirksam verhindert.

Im Besonderen ist die Zugangsöffnung mittels des Handschiebers dicht verschließbar. Dadurch ist eine Kapselung des Geräteeinschubs gemäß der Schutzklasse 54 gegen Staub und Spritzwasser vorteilhaft möglich. Durch den Selbstschließmechanismus des Handschiebers wird erreicht, dass nach erfolgter Einstellung der Trenn-, Test- oder Betriebsstellung und nach Herausziehen des Betätigungswerkzeuges wieder eine Abdichtung des Geräteeinschubs nach außen hin erreicht wird. Dadurch wird eine Verschmutzung des Betätigungselementes sowie weiterer im Inneren des Geräteeinschubs angeordneter Komponenten verhindert.

Die Aufgabe der Erfindung wird weiterhin durch einen Schaltschrank mit einer Vielzahl von Einschubfächern gelöst, in welche erfindungsgemäße Geräteeinschübe entfernbar aufgenommen sind. Der Schaltschrank kann für jeden Geräteeinschub auch eine Fachtür aufweisen. An der Fachtür kann jeweils eine Handhabe oder ein Bedienelement drehbar angeordnet sein, welche bzw. welches nach Schließen der Fachtür und bei eingeschobenem Geräteeinschub drehfest mit einer Kupplung der Schaltwelle des Hauptschalters verbindbar ist. Über die Handhabe und der Kupplung kann der Hauptschalter von der Frontseite der Fachtür aus ein- und ausgeschaltet werden.

Alternativ kann der jeweilige Geräteeinschub an seiner Frontseite eine Frontplatte aufweisen, in welcher der Hauptschalter drehbar aufgenommen ist.

Insbesondere sind im Schaltschrank Stromschienen benachbart zu den Einschubfächern angeordnet, wobei Trennkontakte eines Kontaktsystems eines jeweiligen eingeschobenen Geräteeinschubs mit korrespondierenden Stromschienen verbindbar sind.

Nach einer vorteilhaften Ausführungsform ist im Schaltschrank eine Vielzahl von Tragblechen angeordnet, wobei ein Einschubfach zumindest durch ein Tragblech begrenzt ist. In den Tragblechen sind Öffnungen angeordnet bzw. eingebracht, welche mit Endstücken von Riegelstangen, Rastnasen und/oder Zahnstangen in den jeweiligen eingeschobenen Geräteeinschüben korrespondieren.

Die Erfindung sowie vorteilhafte Ausführungen der Erfindung werden im Weiteren anhand der nachfolgenden Figuren näher beschrieben. Es zeigen
- FIG 1: beispielhaft einen Schaltschrank mit einer Vielzahl von erfindungsgemäßen Geräteeinschüben,
- FIG 2: beispielhaft einen erfindungsgemäßen Geräteeinschub in einer Konstruktionsdarstellung und in einer Draufsicht,
- FIG 3, FIG 4: beispielhaft ein erstes und zweites Betätigungswerkzeug,
- FIG 5: die in FIG 2 dargestellte Antriebseinheit 21 mit im Antriebseinheitsgehäuse geführten Zahnstangen 35, 36 im Detail gemäß der Erfindung,
- FIG 6: eine Explosionsdarstellung der Antriebseinheit mit dem zweiteiligen Betätigungselement gemäß FIG 2,
- FIG 7: den Geräteeinschub gemäß FIG 2 in einer perspektivischen Darstellung (von schräg vorne),
- FIG 8: eine Prinzipdarstellung eines Verriegelungsmechanismus mit einem Handschieber in einer Verschlussstellung,
- FIG 9: eine Prinzipdarstellung eines Verriegelungsmechanismus mit dem Handschieber in einer Geöffnet-Stellung,
- FIG 10: eine Detailansicht des mit einem ausgeschalteten Hauptschalter und dem Handschieber zusammenwirkenden Verriegelungsmechanismus gemäß FIG 2,
- FIG 11: eine Detailansicht des Verriegelungsmechanismus gemäß FIG 10 bei eingeschaltetem Hauptschalter,
- FIG 12: den Geräteeinschub gemäß FIG 2 in einer perspektivischen Darstellung (von schräg hinten),
- FIG 13: beispielhaft ein schaltfeldseitiges Tragblech zur Aufnahme des erfindungsgemäßen Geräteeinschubs gemäß FIG 2,
- FIG 14: beispielhaft ein einteiliges Einschubgehäuse eines erfindungsgemäßen Geräteeinschubs mit einer durch Umkantungen gebildeten Frontplatte und Rückwand und
- FIG 15: eine Detailansicht auf einen Rasthebel und auf eine Zahnstange des Geräteeinschubs gemäß FIG 2.

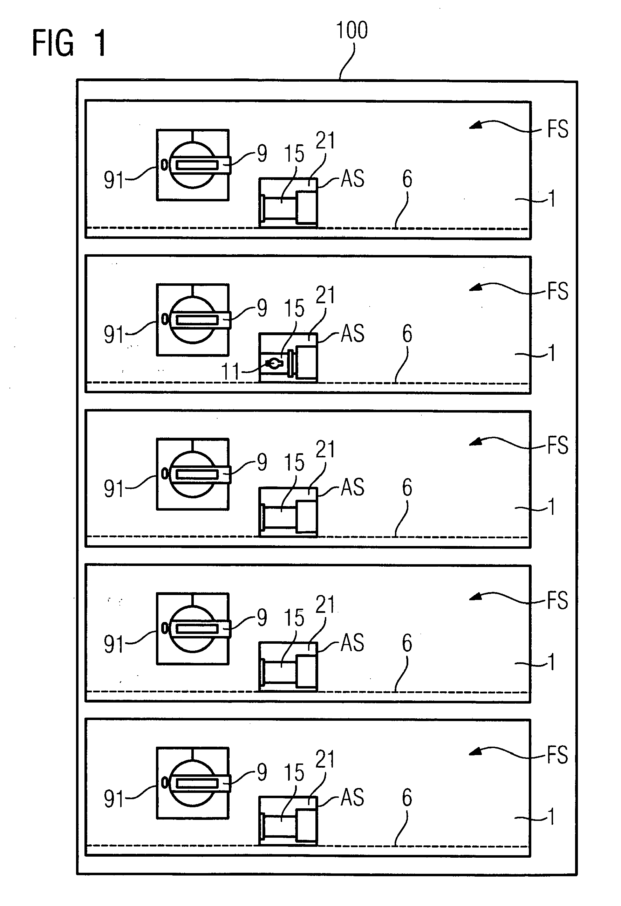

FIG 1 zeigt beispielhaft einen Schaltschrank 100 mit einer Vielzahl von erfindungsgemäßen Geräteeinschüben 1. Im Beispiel der FIG 1 sind fünf Geräteeinschübe 1 im Schaltschrank 100 entfernbar aufgenommen. Mit FS ist eine Front- oder Bedienseite des Geräteeinschubs 1 bzw. einer Fachtür bezeichnet. Der beispielhafte Schaltschrank 100 weist für jeden Geräteeinschub 1 eine nicht weiter dargestellte Fachtür auf. An der Fachtür ist jeweils eine Handhabe 9 drehbar angeordnet. Nach dem Schließen und bei eingeschobenem Geräteeinschub 1 ist die Handhabe 9 drehfest mit einer Kupplung der Schaltwelle des Hauptschalters verbindbar. Über die Handhabe 9 und Kupplung kann der Hauptschalter von der Frontseite FS der Fachtür aus ein- und ausgeschaltet werden.

Alternativ kann der jeweilige Geräteeinschub 1 an seiner Frontseite eine Frontplatte 4 aufweisen, durch welche über eine Handhabe der Hauptschalter 9 bedient werden kann. In diesem Fall kann auf eine Fachtür verzichtet werden. In diesem Fall schließt die Frontplatte 4 nach dem Einschieben vorzugsweise komplett und dicht mit einem Schaltschrankrahmen ab.

Der oberste der gezeigten Geräteeinschübe 1 zeigt eine in einer Aussparung AS im Bereich der Frontseite FS aufgenommene Antriebseinheit 21, in deren Frontteil ein Handschieber 15 beweglich angeordnet ist. Der Handschieber 15 befindet sich in einer Verschluss- oder Ruhestellung, bei welcher eine dahinterliegende Zugangsöffnung abgedeckt wird. Im linken Bereich der Frontseite FS ist eine Handhabe 9 eines Hauptschalters gezeigt. Mit dem Bezugszeichen 91 ist eine Anzeigeplatte bezeichnet, welche den Schaltzustand des Hauptschalters anzeigt. Im Beispiel der FIG 1 befinden sich alle Hauptschalter im ausgeschalteten Zustand.

Bei dem darunterliegenden Geräteeinschub 1 ist der Handschieber 15 nach rechts geschoben, so dass nun die dahinterliegende Zugangsöffnung 11 zum Einstecken eines Betätigungswerkzeuges sichtbar ist.

Vorzugsweise sind im gezeigten Schaltschrank 100 Stromschienen benachbart zu den Einschubfächern für die Geräteeinschübe 1 angeordnet. Die in dieser Darstellung nicht sichtbaren Trennkontakte eines Kontaktsystems eines jeweiligen eingeschobenen Geräteeinschubs 1 sind dann mit den korrespondierenden Stromschienen verbindbar.

Gemäß einer Ausführungsform ist im Schaltschrank 100 eine Vielzahl von Tragblechen 6 angeordnet, wobei ein Einschubfach zumindest durch ein solches Tragblech 6 begrenzt ist. Im Tragblech 6 sind Öffnungen angeordnet, welche mit Endstücken von Riegelstangen, Rastnasen und/oder Zahnstangen in den jeweiligen eingeschobenen Geräteeinschüben 1 korrespondieren. In dieser Darstellung sind die zuvor genannten Verriegelungskomponenten selbst nicht sichtbar.

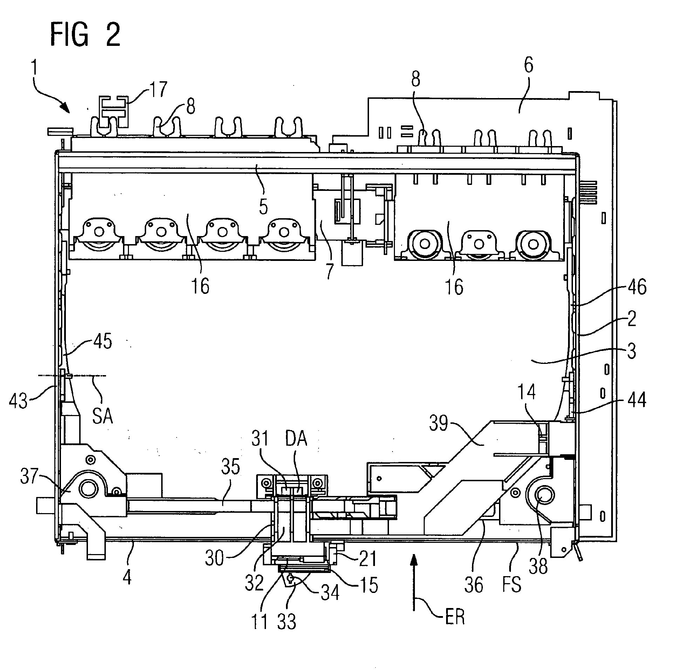

FIG 2 zeigt beispielhaft einen erfindungsgemäßen Geräteeinschub 1 in einer Konstruktionsdarstellung und in einer Draufsicht.

Der in FIG 2 dargestellte Geräteeinschub 1 weist ein Einschubgehäuse 2 mit einer Grundplatte 3, einer Frontseite FS, einer Rückwand 5 sowie zwei Seitenwänden 43, 44 auf. Mit dem Bezugszeichen 7 ist ein verfahrbares Trennkontaktsystem bezeichnet, das mittels einer ersten Verfahrmechanik relativ zur Grundplatte 3 in Einschubrichtung ER verschoben werden kann. Das Trennkontaktsystem 7 weist Trennkontakte 8 zur Kontaktierung mit entsprechenden schaltfeldseitigen Stromschienen 17 für die Energiezuleitung auf. Die Trennkontakte 8 sind Teil eines Kontaktsystems 16, welches im Einschubgehäuse 2 befestigt ist. Im Einschubgehäuse 2 ist vorzugsweise ein Hauptschalter angeordnet, welcher über eine Schaltwelle mittels der Handhabe 9 betätigt werden kann. Im Beispiel der FIG 2 sind aus Gründen der Übersichtlichkeit der Hauptschalter und die Handhabe nicht dargestellt.

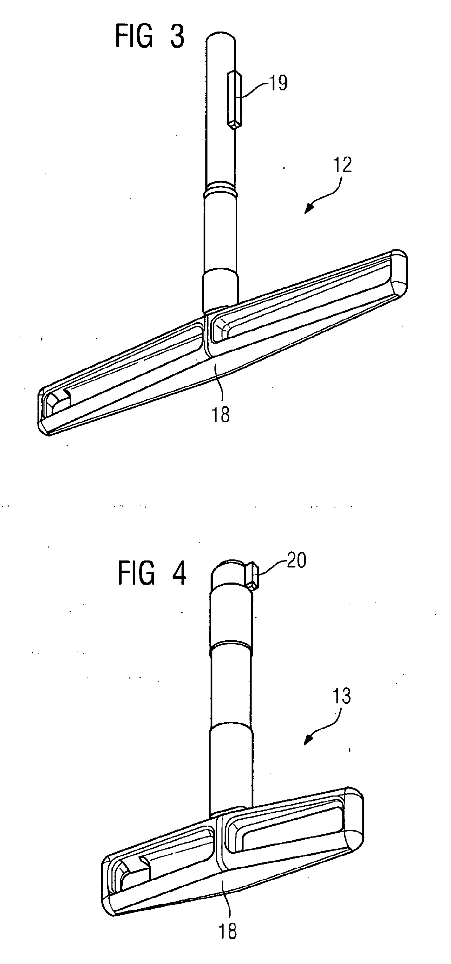

Im Bereich der Frontseite FS bzw. im Bereich der Bedienfront befindet sich die Zugangsöffnung 11 zum Einstecken des jeweiligen Betätigungswerkzeuges zum Verfahren des Trennkontaktsystems 7 in eine Trenn- oder Betriebsstellung bzw. zum Verfahren eines Steuersteckers 14 mittels einer zweiten Verfahrmechanik in eine Test- oder Trennstellung. Die beiden Betätigungswerkzeuge bzw. Antriebsschlüssel sind in den nachfolgenden Figuren FIG 3 und FIG 4 im Detail zu sehen.

Im Bereich der Frontseite FS bzw. an einem Frontteil der Antriebseinheit 21 ist der quer zur Einschubrichtung ER beweglich geführte Handschieber 15 zu sehen. Mit dem Bezugszeichen 33 ist ein Griffstück des Handschiebers 15 bezeichnet. Im Griffstück 33 sowie im Frontteil der Antriebseinheit 21 sind jeweils eine Verschlussöffnung 34 eingebracht, welche in der gezeigten Verschlussstellung des Handschiebers 15 ein Verschließen des Handschiebers 15 mittels eines Vorhängeschlosses ermöglicht. Vorzugsweise ist der Handschieber 15 mit einer nicht weiter gezeigten Vorspannfeder verbunden, welche den Handschieber 15 bei Nichtbetätigung in die Verschlussstellung zurückfahren lässt, so dass die Zugangsöffnung 11 wieder abgedeckt ist.

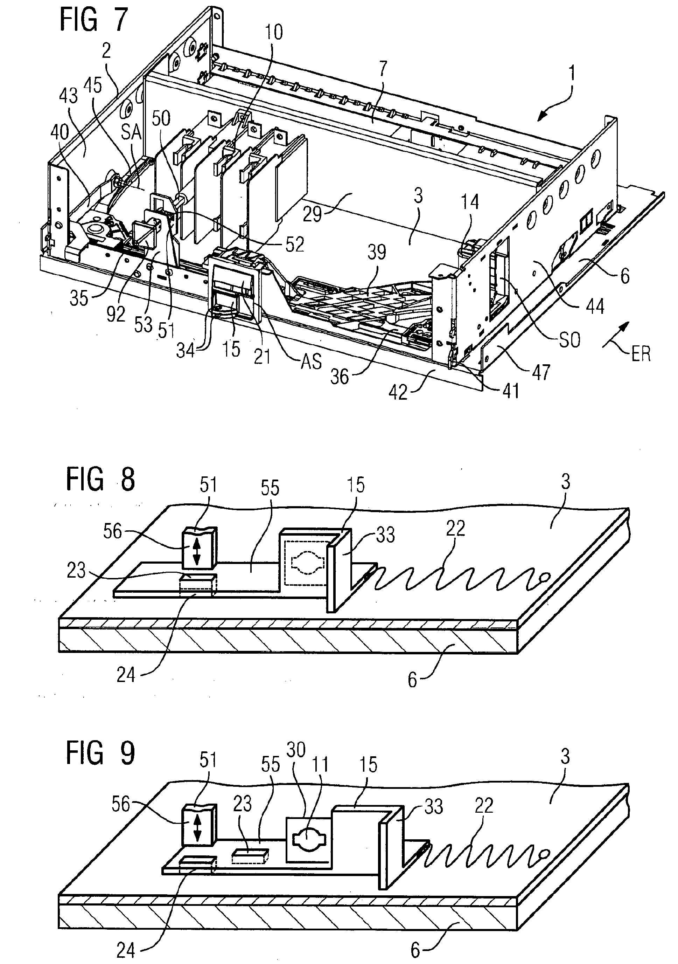

Der Handschieber 15 wirkt derart mit dem Hauptschalter 10 zusammen, dass der Handschieber 15 bei eingeschaltetem Hauptschalter 10 nicht in eine Geöffnet-Stellung verschiebbar ist. Andererseits kann bei geöffnetem Handschieber 15 der Hauptschalter 10 nicht eingeschaltet werden. Dieser gegenseitige Verriegelungsmechanismus wird in den nachfolgenden FIG 8, FIG 9, FIG 12 und FIG 13 im Detail beschrieben.

Erfindungsgemäß ist im Einschubgehäuse 2 ein zweiteiliges, über die Zugangsöffnung 11 mittels eines Betätigungswerkzeuges betätigbares Betätigungselement 30 angeordnet. Das erste Teil 31 ist mit der ersten Verfahrmechanik verbunden, während das zweite Teil 32 mit der zweiten Verfahrmechanik verbunden ist. Insbesondere ist das zweiteilige Betätigungselement 30, wie FIG 2 zeigt, zylindrisch und in axialer Richtung zweiteilig ausgeführt, das heißt, dass das erste Teil 31 axial benachbart zum zweiten Teil 32 angeordnet ist. Mit "axial" ist eine Richtung parallel zur Drehachse DA des Betätigungselementes 30 bezeichnet.

Gemäß einer vorteilhaften Ausführungsform weisen die beiden Teile 31, 32 des Betätigungselementes 30 eine in der FIG 2 nicht weiter dargestellte tangentiale Außenverzahnung auf. Die Außenverzahnung des ersten Teils 31 des Betätigungselementes 30 ist mit zwei Zahnstangen 35, 36 zum Verfahren des Trennkontaktsystems 7 in Einschubrichtung ER im Eingriff. Die Außenverzahnung des zweiten Teils 32 des Betätigungselementes 30 ist mit einer Steuerzahnstange 39 zum Verfahren des Steuersteckers 14 im Eingriff.

Die erste Verfahrmechanik weist im Beispiel der FIG 2 die beiden Zahnstangen 35, 36, zwei als Zahnscheiben 37, 38 ausgebildete Umlenkeinheiten und jeweils einen damit verbundenen Verfahrschieber 45, 46 auf. Die zweite Verfahrmechanik weist die Steuerzahnstange 39 bzw. Strebe mit der Verzahnung sowie den Steuerstecker 14 selbst auf. Die Steuerzahnstange 39 ist gleichfalls im Einschubgehäuse 2 beweglich geführt.

Vorzugsweise befindet sich, wie im Beispiel der FIG 2 dargestellt, die Zugangsöffnung 11 in der Antriebseinheit 21 selbst. Die Antriebseinheit 21 weist ein nicht weiter bezeichnetes Antriebseinheitsgehäuse auf, in welchem das zweiteilige Betätigungselement 30 untergebracht ist. Die Zahnstangen 35 und 36 sind in diesem Falle im Antriebseinheitsgehäuse 2 geführt.

FIG 3 und FIG 4 zeigen beispielhaft ein erstes und zweites Betätigungswerkzeug 12, 13.

Sie können jeweils zum Einstellen einer Trenn-, Test- oder Betriebsstellung in die Zugangsöffnung 11 eingesteckt werden. Beide Teile 31, 32 des Betätigungselementes 30 können über das erste Betätigungswerkzeug 12 gemeinsam betätigt werden. Hierzu weist das erste Betätigungswerkzeug 12 eine im Vergleich zum zweiten Betätigungswerkzeug 13 längere Mitnehmernase 19 auf. Die Mitnehmernase 19 ist so bemessen, dass die beiden Teile 31, 32 bei Aufbringung eines Drehmoments gemeinsam verdreht werden können. Dagegen weist das zweite Betätigungswerkzeug 13 eine vergleichsweise kurze Mitnehmernase 20 auf, so dass nur das zweite Teil 32 des Betätigungselementes 30 in Drehung versetzt werden kann.

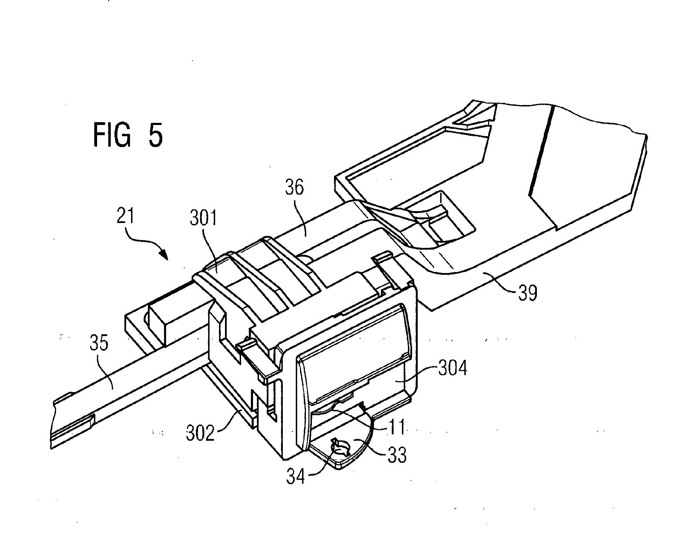

FIG 5 zeigt die in FIG 2 dargestellte Antriebseinheit 21 mit im Antriebseinheitsgehäuse geführten Zahnstangen 35, 36 gemäß der Erfindung im Detail. Mit dem Bezugszeichen 39 ist die mit der oberen Zahnstange 36 verbundene Strebe bezeichnet.

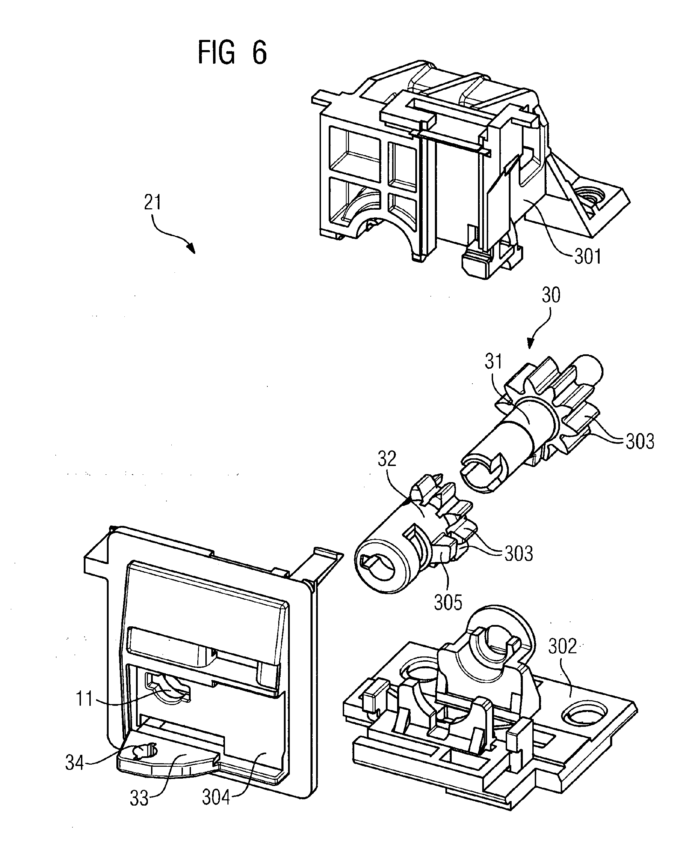

FIG 6 zeigt eine Explosionsdarstellung der Antriebseinheit 21 mit dem zweiteiligen Betätigungselement 30 gemäß FIG 2. Im oberen Teil der FIG 6 ist ein Oberteil 301, im rechten unteren Teil der FIG 6 das Unterteil 302 der Antriebseinheit 21 zu sehen.

Zwischen den beiden Gehäuseteilen 301, 302 sind die zwei Teile 31, 32 des Betätigungselementes 30 in Form von Schaltwellen gelagert. Das zweite Teil 32 ist axial benachbart zum ersten Teil 31 und zudem konzentrisch zu diesem angeordnet. Das heißt, dass das zweite Teil 32 koaxial zum teilweise innenliegenden ersten Teil 31 angeordnet ist. Beide Teile bzw. Schaltwellen 31, 32 weisen jeweils eine tangentiale Außenverzahnung 303 in Form von Zahnrädern auf. Ineinander geschoben liegen die beiden Verzahnungen 303 axial benachbart. Mit "axial" ist dabei eine Richtung parallel zu der gemeinsamen Drehachse DA des Betätigungselementes 30 bzw. der Schaltwellen 31, 32 bezeichnet. Das äußere Teil 32 ist mechanisch mit der zweiten Verfahrmechanik verbunden. Das innere Teil 31 ist mechanisch mit der ersten Verfahrmechanik verbunden.

Nach Zusammenfügen des Oberteils 301, des Unterteils 302 mit den dazwischenliegenden Teilen 31, 32 des Betätigungselementes 30 und den Zahnstangen 35, 36 wird die Antriebseinheit 21 durch Einschnappen des Frontteils 304 zu einer Baueinheit fixiert.

Die Teststellung wird dadurch erreicht, indem das zweite Teil 32 mittels des zweiten Betätigungswerkzeugs 13 mit der kurzen Mitnehmernase 20 um ca. 180° im Uhrzeigersinn gedreht wird. Eine maximal vorgebbare mögliche Drehung zwischen einer Ruhedrehstellung und einer Arbeitsdrehstellung wird durch einen am Außenumfang des zweiten Teils 32 angeordneten Riegels 305 als Drehanschlag für beide Teile bzw. Schaltwellen 31, 32 erreicht.

Die Betriebsstellung wird dadurch erreicht, indem das erste und zugleich das zweite Betätigungselement 31, 32 mittels des ersten Betätigungswerkzeugs 12 mit der langen Mitnehmernase 19 um ca. 180° im Uhrzeigersinn gedreht werden.

Die beiden Betätigungselemente 31, 32 sind untereinander derart mechanisch gekoppelt, dass es nicht möglich ist, von der Teststellung unmittelbar in die Betriebsstellung zugelangen. Es ist daher mit dem zweiten Betätigungswerkzeug 13 erst wieder die Trennstellung einzustellen, bevor mit dem ersten Betätigungswerkzeug 12 von dieser Trennstellung ausgehend die Betriebsstellung eingestellt werden kann.

In der vorliegenden FIG 6 ist der Handschieber selbst nicht dargestellt, sondern lediglich die Aufnahme des Handschiebers im Frontteil 304. Vorzugsweise ist der Handschieber abgedichtet gegenüber diesem Fronteil 304 der Antriebseinheit 21 ausgeführt. Insbesondere ist zwischen dem Frontteil 304 und/oder dem Handschieber ein nicht weiter gezeigtes Dichtelement angeordnet. Ein solches Dichtelement kann z.B. eine Gummierung oder ein Filzstreifen sein.

FIG 7 zeigt den Geräteeinschub 1 gemäß FIG 2 in einer perspektivischen Darstellung (von schräg vorne).

In dieser Darstellung sind die beiden Verfahrmechaniken besonders gut erkennbar. Wie die FIG 7 zeigt, wird der Steuerstecker 14 mittels der zweiten Verfahrmechanik verfahren, das heißt über die Strebe 39 quer zu Einschubrichtung ER. Wird der Steuerstecker 14 in die Teststellung verfahren, so ragt dieser durch eine in der Seitenwand 44 ausgesparte Steuersteckeröffnung SO hindurch und kann somit ein nicht weiter dargestelltes schaltfeld- bzw. schaltschrankseitiges Gegenstück kontaktieren. Dieses kann z.B. ein Kupplungsstecker sein.

Alternativ kann der Steuerstecker 14 auch so im Einschubgehäuse 2 des Geräteeinschubs 1 angeordnet sein, dass dieser in Einschubrichtung durch eine in der Rückwand 5 ausgesparten Öffnung hindurch bewegbar ist.

FIG 8 zeigt eine Prinzipdarstellung eines Verriegelungsmechanismus mit einem Handschieber 15 in einer Verschlussstellung.

Der Handschieber 15 ist mit einer quer zur Einschubrichtung und parallel zur Grundplatte 3 beweglich angeordneten Riegelplatte 55 verbunden. Die Handschieber 15 und die Riegelplatte 55 können auch einteilig, wie z.B. als Metallbiegeteil, ausgeführt sein. Mittels einer Vorspannfeder 22 wird der Handschieber 15 in der Verschlussstellung gehalten. In der Riegelplatte 55 ist beispielhaft eine Riegelöffnung 23 eingebracht. Eine mit dem Hauptschalter 10 in einer mechanischen Wirkverbindung stehende vertikale Riegelstange 51 weist ein unteres Endstück auf, welches im eingeschalteten Zustand des Hauptschalters 10 nur dann in die Riegelöffnung 23 eingreifen kann, wenn der Handschieber 15 sich in der Verschlussstellung befindet. Beim Einschalten des Hauptschalters 10 bewegt sich die Riegelstange 51 nach unten, greift in die Riegelöffnung 23 ein und verriegelt dadurch den Handschieber 15 gegen ein Verschieben in die Geöffnet-Stellung.

Die Riegelöffnung 23 liegt in der Verschlussstellung des Handschiebers 15 zugleich einer korrespondierenden Tragblechöffnung 24 gegenüber. Dadurch ist Geräteeinschub 1 mit dem Tragblech 6 gegen ein Herausziehen entgegen der Einschubrichtung ER verriegelbar, wenn das untere Endstück 56 der Riegelstange 51 durch die Riegel- und Tragblechöffnung 23, 24 bei eingeschaltetem Hauptschalter 10 hindurchgreift.

FIG 9 zeigt eine Prinzipdarstellung eines Verriegelungsmechanismus mit dem Handschieber 15 in einer Geöffnet-Stellung. In diesem Fall ist ein Einschalten des Hauptschalters 10 nicht möglich, da durch ein Verschieben der Riegelöffnung 23 mit der Riegelplatte 55 ein Hindurchgreifen des unteren Endstücks 56 der Riegelstange 52 in die Riegelöffnung 23 selbst verhindert wird.

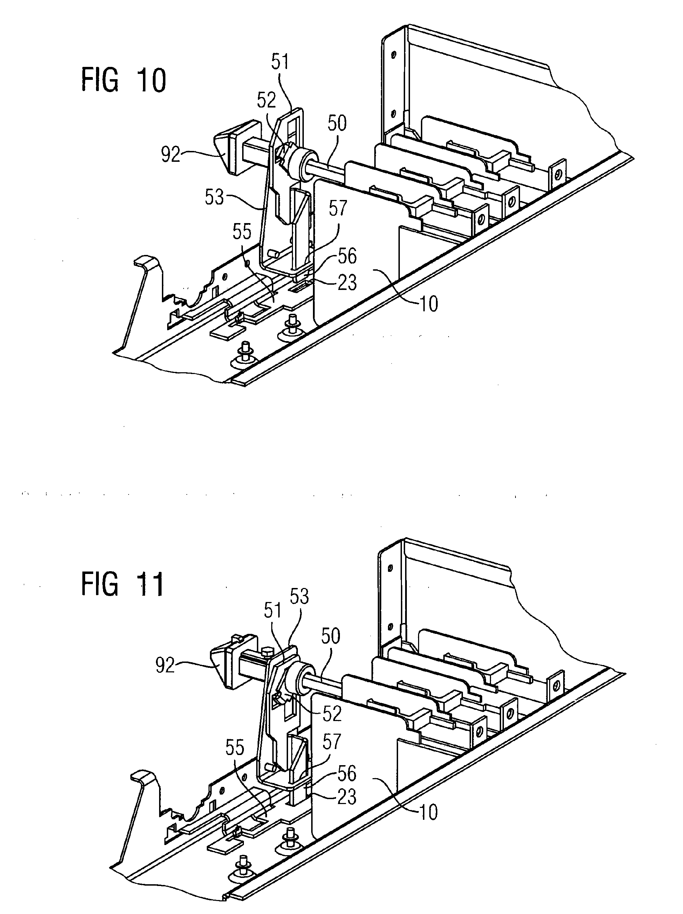

FIG 10 zeigt eine Detailansicht des mit einem ausgeschalteten Hauptschalter 10 und dem Handschieber 15 zusammenwirkenden Verriegelungsmechanismus gemäß FIG 2. In dieser Darstellung ist die wechselseitige Verriegelungsmechanik zwischen Hauptschalter 10 und Handschieber 15 in einer konstruktiven Ausführungsform zu sehen.

Der gezeigte Hauptschalter 10 weist eine Schaltwelle 50 mit einem darauf sitzenden Schwenkhebel 52 auf, welcher in eine Aussparung einer senkrecht angeordneten Riegelstange 51 greift. Eine gerätefeste Standarte 53 dient zur Abstützung der Schaltwelle 50 sowie zur senkrechten Führung des unteren Endstücks 56 der Riegelstange 51. Hierzu weist die Standarte 53 ein horizontal abgewinkeltes Winkelstück mit einer Führungsöffnung 57 auf, wobei deren Querschnitt geringfügig größer ist als der des Endstücks 56 der Riegelstange 51. Somit ist der ausgeschaltete Hauptschalter 10 nur dann in der Verschlussstellung des Handschiebers 15 einschaltbar, wenn das untere Endstück 56 der Riegelstange 51 in die Riegelöffnung 23 hineinragen kann. Dies ist im Beispiel der FIG 10 möglich, da sich der Handschieber 15 in der Verschlussstellung befindet, so dass die Öffnung 23 dem Endstück 56 gegenüberliegt.

FIG 11 zeigt eine Detailansicht des Verriegelungsmechanismus gemäß FIG 10 bei eingeschaltetem Hauptschalter 10. In dieser Darstellung kann das untere Endstück 56 zur Verriegelung des Handschiebers 15 durch die Riegelöffnung 23 und durch eine nicht sichtbare, darunterliegende Tragblechöffnung 24 zur Verriegelung des Geräteeinschubs 1 gegen ein Herausziehen hindurchgreifen. Zudem wird ein Aufschieben des Handschiebers 15 zum Erreichen der Zugangsöffnung 11 verhindert.

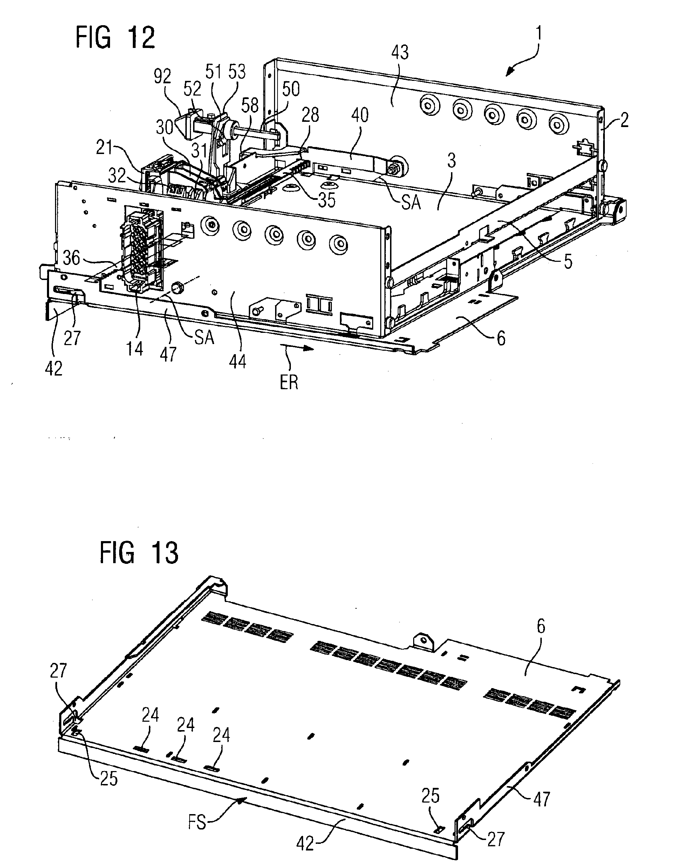

FIG 12 zeigt den Geräteeinschub 1 gemäß FIG 2 in einer perspektivischen Darstellung (von schräg hinten). Es sind zum besseren Verständnis des Trennkontaktsystems 7 mit dem Hauptschalter 10, das Kontaktsystem 16 sowie die Umlenkeinheiten 37, 38 nicht dargestellt.

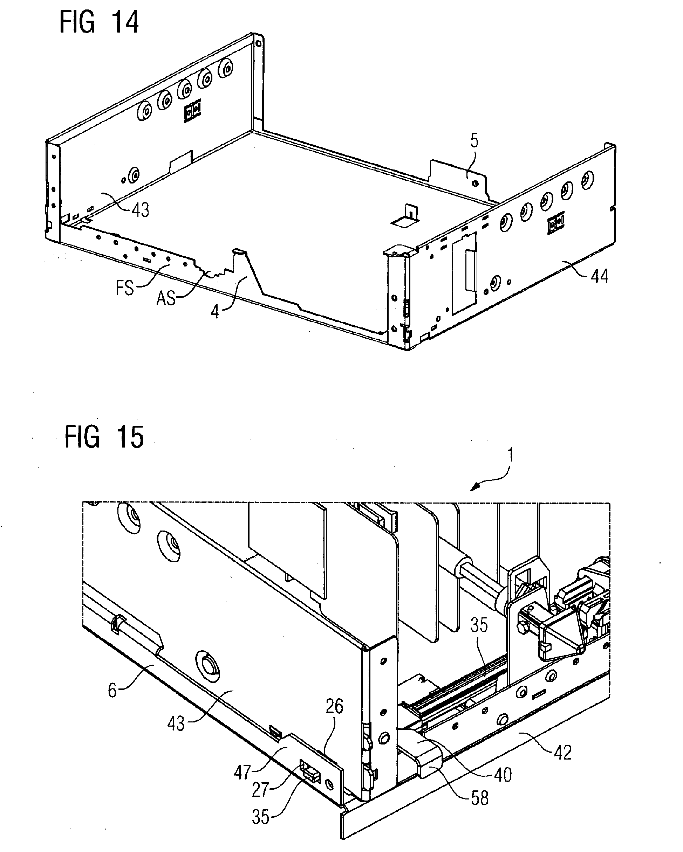

Gemäß einer Ausführungsform ist die Außenverzahnung des ersten Teils 31 des Betätigungselementes 30 mit zwei im Einschubgehäuse 2 quer zur Einschubrichtung ER und parallel zur Grundplatte 3. beweglich gelagerten Zahnstangen 35, 36 im Eingriff. Beim Verfahren des Trennkontaktsystems 7 in die Betriebsstellung greifen die Zahnstangen 35, 36 in ein schaltfeldseitiges Tragblech 6 zum Verriegeln des Geräteeinschubs 1 mit dem Schaltfeld. Die Zahnstangen 35, 36 ragen in der Betriebsstellung jeweils in eine Öffnung 27 im schaltfeldseitigen Tragblech 6 hindurch. Im Beispiel der FIG 12 weist das Tragblech 6 im Seitenbereich eine Abkantung bzw. einen Kragen 42 auf, in welcher bzw. in welchen die entsprechende Öffnung 27 eingebracht ist (siehe dazu auch FIG 13 und FIG 15).

Weiterhin ist in jeder Seitenwand 43, 44 des Einschubgehäuses 2 ein schwenkbar gelagerter Rasthebel 40, 41 angeordnet, welcher jeweils ein abgewinkeltes Endstück 58 aufweist. Das Endstück 58 dient zum Anheben des Rasthebels 40, 41 beim Einschieben des Geräteeinschubs 1 (siehe dazu auch FIG 13).

Im Beispiel der FIG 12 verläuft die Schwenkachse SA der Rasthebel 41, 42 senkrecht zur jeweiligen Seitenwandebene. Aufgrund ihres Eigengewichtes fallen die Rastnasen 58 eigenständig in die entsprechende Verriegelungsöffnung 25.

Nach einer besonderen Ausführungsform weisen die Rasthebel 40, 41, von denen in der Darstellung der FIG 12 nur der Rasthebel 40 zu sehen ist, jeweils eine Hebelöffnung 28 auf. Der jeweilige Rasthebel 40, 41 wirkt derart mit der Zahnstange 35, 36 zusammen, dass in der Betriebsstellung ein Entriegeln des Rasthebels 40, 41 durch die in die Hebelöffnung 28 hindurchragende Zahnstange 35, 36 verhinderbar ist.

FIG 13 zeigt beispielhaft ein schaltfeldseitiges Tragblech 6 zur Aufnahme des erfindungsgemäßen Geräteeinschubs 1 gemäß FIG 2.

Das gezeigte Tragblech 6 ist im Wesentlichen plan ausgeführt. Im Seitenbereich und an der Frontseite FS sind Öffnungen 24, 25, 27 zu sehen, in welche ein geräteeinschubseitige Endstück 56 der Riegelstange 51, zwei Rastnasen 58 der beiden Rasthebel 40, 41 sowie zwei Enden der Zahnstangen 35, 36 zum Verriegeln des Geräteeinschubs 1 mit dem schrankseitigen Tragblech 6 verriegeln können. Im Beispiel der FIG 13 sind die Öffnungen 27 in einer nach oben zeigenden Abkantung 47 im Seitenbereich des Tragblechs 6 eingebracht.

FIG 14 zeigt beispielhaft ein einteiliges Einschubgehäuse 2 eines erfindungsgemäßen Geräteeinschubs 1 mit einer durch Umkantungen gebildeten Frontplatte 4 und Rückwand 5.

Wie das Beispiel von FIG 14 sind im Bereich der Frontseite FS des Geräteeinschubs 1 die "Frontplatte" 4 bzw. die "Rückwand" durch die Abkantungen nur zum geringen Teil ausgebildet. Der gezeigte Geräteeinschub 1 ist zum Einschieben in einen Schaltschrank 100 ausgebildet, welcher zum Verschließen der eingeschobenen Geräteeinschübe 1 Fachtüren aufweist. Aus diesem Grund reduziert sich vorteilhaft die Frontplatte 4 sowie die Rückwand 5 auf das zur Aufnahme der frontseitigen Komponenten erforderliche Mindestmaß. Mit AS ist die Aussparung zur Aufnahme der erfindungsgemäßen Antriebseinheit 21 bezeichnet. Die teilweise in der Frontplatte 4 ersichtliche Kontur der Aussparung AS stimmt dabei mit der Außenkontur der in den Figuren FIG 5 und FIG 6 gezeigten Antriebseinheit 21 überein.

FIG 15 zeigt eine Detailansicht auf einen Rasthebel 40 und auf eine Zahnstange 35 des Geräteeinschubs 1 gemäß FIG 2. In diesem Beispiel ist besonders gut erkennbar, wie in der Betriebsstellung des Geräteeinschubs 1 die Zahnstange 35 in die Öffnung 27 zum Verriegeln greift.

### Bezugszeichenliste

- 1: Geräteeinschub, Einschubkassette
- 2: Einschubgehäuse
- 3: Grundplatte des Einschubgehäuses
- 4: vordere Umkantung, Frontplatte
- 5: Rückwand des Einschubgehäuses
- 6: Fachboden, Tragblech
- 7: System zum Verschieben von Trennkontakten
- 8: Trennkontakte
- 9: Handhabe des Hauptschalters
- 10: Hauptschalter
- 11: Zugangsöffnung, Kurbelöffnung
- 12, 13: Betätigungswerkzeug, Hilfswerkzeug
- 14: Steuerstecker
- 15: Handschieber
- 16: Kontaktsystem
- 17: Stromschiene
- 18: Handgriff
- 19, 20: Mitnehmernase
- 21: Frontelement der Antriebseinheit
- 22: Spannfeder
- 23-28: Öffnungen, Aussparungen
- 29: Querwand
- 30: zweiteiliges Betätigungselement
- 31: erstes Teil des Betätigungselementes, innere Schaltwelle
- 32: zweites Teil des Betätigungselementes, äußere Schaltwelle
- 33: Griffstück
- 34: Verschlussöffnungen

- 35, 36: Schubstange, Zahnstange
- 37, 38: Zahnscheiben, Umlenkeinheit
- 39: Steuerzahnstange, Strebe mit Verzahnung, Schubstange mit Verzahnung
- 40, 41: Rasthebel
- 42, 47: Abkantung, Kragen
- 43, 44: Seitenwand
- 45, 46: Verfahrschieber
- 50: Schaltwelle des Hauptschalters
- 51: Riegelstange
- 52: Schwenkhebel
- 53: Standarte
- 55: Riegelplatte
- 56: Endstück der Riegelstange
- 57: Führungsöffnung
- 58: abgewinkeltes Endstück
- 91: Anzeigeplatte
- 92: Kupplung

- 100: Schaltschrank

- 301: Oberteil der Antriebseinheit
- 302: Unterteil der Antriebseinheit
- 303: Außenverzahnung
- 304: Frontteil der Antriebseinheit
- 305: Riegel

- AS: Aussparung
- DA: Drehachse
- ER: Einschubrichtung
- FS: Frontseite, Bedienfront
- SA: Schwenkachse
- SO: Steuersteckeröffnung

## Patentansprüche

1. Geräteeinschub für ein elektrisches Schaltfeld mit
- einem Einschubgehäuse (2) mit einer Grundplatte (3), eine Frontseite (FS) sowie einer Rückwand (5),
- einem mittels einer ersten Verfahrmechanik relativ zur Grundplatte (3) in Einschubrichtung verschiebbaren Trennkontaktsystem (7) zum Verfahren von Trennkontakten (8) für die Energiezuleitung,
- einem im Einschubgehäuse (2) angeordneten und mittels eines Bedienelementes (9) im Bereich der Frontseite (FS) betätigbaren Hauptschalter (10),
- einer im Bereich der Frontseite (FS) angeordneten Zugangsöffnung (11) zum Einstecken eines Betätigungswerkzeuges (12, 13) zum Verfahren des Trennkontaktsystems (7) in eine Trenn- oder Betriebsstellung, wobei das Betätigungswerkzeug (12, 13) bei eingeschaltetem Hauptschalter (10) nicht in die Zugangsöffnung (11) einsteckbar ist und wobei der Hauptschalter (10) bei eingestecktem Betätigungswerkzeug (12, 13) nicht einschaltbar ist,
- einem mittels einer zweiten Verfahrmechanik in eine Test-oder Trennstellung verfahrbaren Steuerstecker (14) und
- einem im Einschubgehäuse (2) angeordneten zweiteiligen, über die Zugangsöffnung (11) mittels eines Betätigungswerkzeuges (12, 13) betätigbaren Betätigungselement (30), wobei das erste Teil (31) mit der ersten Verfahrmechanik verbunden ist, wobei das zweite Teil (32) mit der zweiten Verfahrmechanik verbunden ist, wobei beide Teile (31, 32) über das erste Betätigungswerkzeug (12) gemeinsam betätigbar sind und wobei über das zweite Betätigungswerkzeug (13) nur das zweite Teil (32) betätigbar ist,
**dadurch gekennzeichnet, dass** eine Aussparung (AS) im Bereich der Frontseite (FS) vorhanden ist, in welche eine Antriebseinheit (21) mit dem zweiteiligen Betätigungselement (30) und mit der in einem Frontteil (304) der Antriebseinheit (21) angeordneten Zugangsöffnung (11) aufgenommen ist, wobei im Frontteil (304) ein vorgespannter, quer zur Einschubrichtung beweglich geführter und die Zugangsöffnung (11) verschließender Handschieber (15) angeordnet ist, welcher derart mit dem Hauptschalter (10) zusammenwirkt, dass der Handschieber (10) bei eingeschaltetem Hauptschalter (10) nicht in eine Geöffnet-Stellung verschiebbar ist und dass der Hauptschalter (10) in der Geöffnet-Stellung des Handschiebers (15) nicht einschaltbar ist.

2. Geräteeinschub nach Anspruch 1,
**dadurch gekennzeichnet, dass**
das Betätigungselement (30) zylindrisch und in axialer Richtung zweiteilig ausgeführt ist.

3. Geräteeinschub nach Anspruch 2,
**dadurch gekennzeichnet, dass**
- die beiden Teile (31, 32) des Betätigungselementes (30) eine tangentiale Außenverzahnung aufweisen,
- dass die Außenverzahnung des ersten Teils (31) des Betätigungselementes (30) mit zumindest einer Zahnstange (35, 36) und/oder Zahnscheibe zum Verfahren des Trennkontaktsystems (7) in Einschubrichtung im Eingriff ist und
- dass die Außenverzahnung des zweiten Teils (32) des Betätigungselementes (30) mit einer Steuerzahnstange (39) und/oder Zahnscheibe zum Verfahren des Steuersteckers (14) im Eingriff ist.

4. Geräteeinschub nach Anspruch 3,
**dadurch gekennzeichnet, dass**
- die Außenverzahnung des ersten Teils (31) des Betätigungselementes (30) mit zwei im Einschubgehäuse (2) quer zur Einschubrichtung und parallel zur Grundplatte (3) beweglich gelagerten Zahnstangen (35, 36) im Eingriff ist und
- dass die Zahnstangen (35, 36) beim Verfahren des Trennkontaktsystems (7) in die Betriebsstellung in ein schaltfeldseitiges Tragblech (6) zum Verriegeln des Geräteeinschubs mit dem Schaltfeld greifen.

5. Geräteeinschub nach Anspruch 4,
**dadurch gekennzeichnet, dass**
die Zahnstangen (35, 36) in der Betriebsstellung jeweils in eine Öffnung (27) im schaltfeldseitigen Tragblech (6) hindurchragen.

6. Geräteeinschub nach einem der vorangegangenen Ansprüche,
**dadurch gekennzeichnet, dass**
- der Handschieber (15) mit einer quer zur Einschubrichtung und parallel zur Grundplatte (3) beweglich angeordneten Riegelplatte (55) mit einer Riegelöffnung (23) verbunden ist,
- dass der Hauptschalter (10) eine Schaltwelle (50) mit einem darauf sitzenden Schwenkhebel (52) aufweist, welcher in eine Aussparung einer senkrecht angeordneten Riegelstange (51) greift und
- dass der Hauptschalter (10) nur dann in der Verschlussstellung des Handschiebers (15) einschaltbar ist, wenn ein unteres Endstück (56) der Riegelstange (51) in die Riegelöffnung (23) hineinragt.

7. Geräteeinschub nach Anspruch 6,
**dadurch gekennzeichnet, dass**
- die Riegelöffnung (23) in der Verschlussstellung des Handschiebers (15) einer korrespondierenden Tragblechöffnung (24) gegenüberliegt und
- dass der Geräteeinschub mit dem Tragblech (6) gegen ein Herausziehen entgegen der Einschubrichtung verriegelbar ist, wenn bei eingeschaltetem Hauptschalter (10) das untere Endstück (56) der Riegelstange (51) durch die Riegel- und Tragblechöffnung (23, 24) hindurchgreift.

8. Geräteeinschub nach einem der vorangegangenen Ansprüche,
**dadurch gekennzeichnet, dass**
- zumindest ein in einer Seitenwand (43, 44) des Einschubgehäuses (2) schwenkbar gelagerter Rasthebel (40, 41) angeordnet ist und
- dass der Rasthebel (40, 41) eine Rastnase (58) aufweist, welche im eingeschobenen Zustand des Geräteeinschubs in eine korrespondierende Verriegelungsöffnung (25) eines schaltfeldseitigen Tragblechs (6) einrastet.

9. Geräteeinschub nach Anspruch 8,
**dadurch gekennzeichnet, dass**
die Schwenkachse (SA) der Rasthebel (41, 42) senkrecht zur jeweiligen Seitenwandebene verläuft.

10. Geräteeinschub nach Anspruch 9 in Verbindung mit Anspruch 4 oder 5,
**dadurch gekennzeichnet, dass**
der Rasthebel (40, 41) eine Hebelöffnung (28) aufweist und dass der Rasthebel (40, 41) derart mit der Zahnstange (35, 36) zusammenwirkt, dass ein Entriegeln des Rasthebels (40, 41) durch die in die Hebelöffnung (28) in der Betriebsstellung hindurchragende Zahnstange (35, 36) verhinderbar ist.

11. Geräteeinschub nach einem der vorangegangenen Ansprüche,
**dadurch gekennzeichnet, dass** zwischen
dem Frontteil (304) und/oder dem Handschieber (15) ein Dichtelement angeordnet ist.

12. Schaltschrank mit einer Vielzahl von Einschubfächern, in welche Geräteeinschübe (1) nach einem der vorangegangenen Ansprüche entfernbar aufgenommen sind.

13. Schaltschrank nach Anspruch 12,
**dadurch gekennzeichnet, dass**
im Schaltschrank Stromschienen (17) benachbart zu den Einschubfächern angeordnet sind, wobei Trennkontakte (8) eines Kontaktsystems (16) eines jeweiligen eingeschobenen Geräteeinschubs (1) mit korrespondierenden Stromschienen (17) verbindbar sind.

14. Schaltschrank nach Anspruch 12 oder 13,
**dadurch gekennzeichnet, dass**
- im Schaltschrank eine Vielzahl von Tragblechen (6) angeordnet sind, wobei ein Einschubfach zumindest durch ein Tragblech begrenzt ist, und
- dass im Tragblech (6) Öffnungen (24, 25, 27) angeordnet sind, welche mit Endstücken (56) von Riegelstangen (51), Rastnasen (58) und/oder Zahnstangen (35, 36) in den jeweiligen eingeschobenen Geräteeinschüben (1) korrespondieren.

## Claims

1. Withdrawable insert for an electrical switch panel having
- an insert enclosure (2) with a base plate (3), a front face (FS) and a rear wall (5),
- an isolating contact system (7), which can be moved by means of a first movement mechanism relative to the base plate (3) in the insertion direction, for movement of isolating contacts (8) for supplying power,
- a main switch (10) which is arranged in the insert enclosure (2) and can be operated by means of a control element (9) in the area of the front face (FS),
- an access opening (11), which is arranged in the area of the front face (FS), for insertion of an operating tool (12, 13) in order to move the isolating contact system (7) to a disconnected or operating position, wherein the operating tool (12, 13) cannot be inserted in the access opening (11) when the main switch (10) is switched on and wherein the main switch (10) cannot be switched on when the operating tool (12, 13) is inserted,
- a control plug (14) which can be moved by means of a second movement mechanism to a test or disconnected position, and
- a two-part operating element (30), which can be operated through the access opening (11) by means of an operating tool (12, 13), arranged in the insert enclosure (2), wherein the first part (31) is connected to the first movement mechanism, wherein the second part (32) is connected to the second movement mechanism, wherein both parts (31, 32) can be operated jointly via the first operating tool (12), and wherein only the second part (32) can be operated via the second operating tool (13),
**characterized in that**
a cutout (AS) in which a drive unit (21) having the two-part operating element (30) and having the access opening (11) arranged in a front part (304) of the drive unit (21) is accommodated is provided in the area of the front face (FS), wherein a prestressed manual slide (15) is arranged in the front part (304), which manual slide (15) is guided such that it moves transversely with respect to the insertion direction, closes the access opening (11) and interacts with the main switch (10) such that the manual slide (10) cannot be moved to an open position when the main switch (10) is switched on, and such that the main switch (10) cannot be switched on when the manual slide (15) is in the open position.

2. Withdrawable insert according to Claim 1,
**characterized**
**in that** the operating element (30) is cylindrical and is in two parts in the axial direction.

3. Withdrawable insert according to Claim 2,
**characterized**
- **in that** the two parts (31, 32) of the operating element (30) have a tangential external tooth system,
- **in that** the external tooth system on the first part (31) of the operating element (30) engages with at least one toothed rod (35, 36) and/or toothed disk in order to move the isolating contact system (7) in the insertion direction, and
- **in that** the external tooth system on the second part (32) of the operating element (30) engages with a control toothed rod (39) and/or toothed disk in order to move the control plug (14).

4. Withdrawable insert according to Claim 3,
**characterized**
- **in that** the external tooth system on the first part (31) of the operating element (30) engages with two toothed rods (35, 36) which are mounted such that they can move in the insert enclosure (2) transversely with respect to the insertion direction and parallel to the base plate (3),
and
- **in that** the toothed rods (35, 36) engage in a supporting plate (6),
on the switch panel side, in order to lock the withdrawable insert to the switch panel during movement of the isolating contact system (7) to the operating position.

5. Withdrawable insert according to Claim 4, **characterized in that**
the toothed rods (35, 36) each project into an opening (27) in the supporting plate (6) on the switch panel side in the operating position.

6. Withdrawable insert according to one of the preceding claims,
**characterized**
- **in that** the manual slide (15) is connected to a bolt plate (55) which is arranged such that it can move transversely with respect to the insertion direction and parallel to the base plate (3) and has a bolt opening (23),
- **in that** the main switch (10) has a switching shaft (50) with a pivoting lever (52) which is seated on it and engages in a cutout in a vertically arranged bolt rod (51), and
- **in that**, when the manual slide (15) is in the closed position, the main switch (10) can be switched on only when a lower end piece (56) of the bolt rod (51) projects into the bolt opening (23).

7. Withdrawable insert according to Claim 6,
**characterized**
- **in that** when the manual slide (15) is in the closed position, the bolt opening (23) is opposite a corresponding supporting plate opening (24), and
- **in that** the withdrawable insert with the supporting plate (6) can be locked against being pulled out against the insertion direction when the main switch (10) is switched on, when the lower end piece (56) of the bolt rod (51) passes through the bolt and supporting plate opening (23, 24).

8. Withdrawable insert according to one of the preceding claims, **characterized**
- **in that** at least one latching lever (40, 41) is provided and is mounted such that it can pivot in a side wall (43, 44) of the insert enclosure (2), and - in that the latching lever (40, 41) has a latching tab (58) which, when the withdrawable insert is in the inserted state, latches in a corresponding locking opening (25) in a supporting plate (6) on the switch panel side.

9. Withdrawable insert according to Claim 8, **characterized in that** the pivoting axis (SA) of the latching levers (41, 42) runs at right angles to the respective side wall plane.

10. Withdrawable insert according to Claim 9, in conjunction with Claim 4 or 5,
**characterized**
**in that** the latching lever (40, 41) has a lever opening (28), and in that the latching lever (40, 41) interacts with the toothed rod (35, 36) such that the latching lever (40, 41) can be prevented from unlocking by means of the toothed rod (35, 36) which projects into the lever opening (28) in the operating position.

11. Withdrawable insert according to one of the preceding claims,
**characterized in that** a sealing element is arranged between the front part (304) and/or the manual slide (15).

12. Switchgear cabinet having a multiplicity of subsections, in which withdrawable inserts (1) according to one of the preceding claims are accommodated such that they can be removed.

13. Switchgear cabinet according to Claim 12, **characterized in that** busbars (17) are arranged adjacent to the subsections in the switchgear cabinet, wherein isolating contacts (8) of a contact system (16) of a respective inserted withdrawable insert (1) can be connected to corresponding busbars (17).

14. Switchgear cabinet according to Claim 12 or 13,
**characterized**
- **in that** a multiplicity of supporting plates (6) are arranged in the switchgear cabinet, with one subsection being bounded at least by one supporting plate, and
- **in that** openings (24, 25, 27) are arranged in the supporting plate (6) and correspond with end pieces (56) of bolt rods (51), latching tabs (58) and/or toothed rods (35, 36) in the respective inserted withdrawable inserts (1).

## Revendications

1. Tiroir enfichable pour un panneau de commande électrique, comprenant
- une boîte (2) de tiroir ayant une plaque (3) de fond, un côté (FS) avant, ainsi qu'une paroi (5) arrière,
- un système (7) de contacts de séparation pouvant se déplacer dans la direction d'enfichage par rapport à la plaque (3) de fond au moyen d'un premier mécanisme de déplacement en vue de déplacer des contacts (8) de séparation pour l'apport d'énergie,
- un interrupteur (10) principal disposé dans la boîte (2) du tiroir et pouvant être actionné au moyen d'un élément (9) de commande dans la zone du côté (FS) avant,
- une ouverture (11) d'accès disposée dans la zone du côté (FS) avant pour enficher un outil (12, 13) d'actionnement en vue de déplacer le système (7) de contacts de séparation pour le mettre dans une position de séparation ou dans une position de fonctionnement, l'outil (12, 13) d'actionnement ne pouvant pas, lorsque l'interrupteur (10) principal est fermé, être enfoncé dans l'ouverture (11) d'accès et dans lequel l'interrupteur (10) principal ne peut pas être fermé, lorsque l'outil (12, 13) d'actionnement est enfoncé,
- une fiche (14) de commande pouvant être mise dans une position d'essai ou dans une position de séparation au moyen d'un deuxième mécanisme de déplacement et
- un élément (30) d'actionnement disposé dans la boîte (2) du tiroir, en deux parties et pouvant être actionné au moyen d'un outil (12, 13) d'actionnement en passant par l'ouverture (11) d'accès, la première partie (31) étant reliée au premier mécanisme de déplacement, tandis que la deuxième partie (32) est reliée au deuxième mécanisme de déplacement, les deux parties (31, 32) pouvant être actionnées conjointement par le premier outil (12) d'actionnement et seule la deuxième partie (32) pouvant être actionnée par le deuxième outil (13) d'actionnement,
**caractérisé en ce que**
il y a, dans la zone du côté (FS) avant, un évidement (AS), dans lequel est logée une unité (21) d'entraînement ayant l'élément (30) d'actionnement, en deux parties et l'ouverture (11) d'accès disposée dans une partie (304) avant de l'unité (21) d'entraînement, dans lequel il est disposé dans la partie (304) avant un coulisseau (15) à main, qui est précontraint, qui est mobile transversalement à la direction d'enfichage, qui ferme l'ouverture (11) d'accès et qui coopère avec l'interrupteur (10) principal, de manière à ce que le coulisseau (10) à main ne puisse pas être mis dans une position d'ouverture, lorsque l'interrupteur (10) principal est fermé, et de manière à ce que l'interrupteur (10) principal ne puisse pas être fermé dans la position d'ouverture du coulisseau (15) à main.

2. Tiroir enfichable suivant la revendication 1,
**caractérisé en ce que**
l'élément (30) d'actionnement est réalisé d'une manière cylindrique et en deux parties dans une direction axiale.

3. Tiroir enfichable suivant la revendication 2,
**caractérisé en ce que**
- les deux parties (31, 32) de l'élément (30) d'actionnement ont une denture extérieure tangentielle,
- **en ce que** la denture extérieure de la première partie (31) de l'élément (30) d'actionnement engrène avec au moins une crémaillère (35, 36) et/ou avec un disque denté, pour faire se déplacer le système (7) de contacts de séparation dans la direction d'enfichage et
- **en ce que** la denture extérieure de la deuxième partie (32) de l'élément (30) d'actionnement engrène avec une crémaillère (39) de commande et/ou avec un disque denté, pour le déplacement de la fiche (14) de commande.

4. Tiroir enfichable suivant la revendication 3,
**caractérisé en ce que**
- la denture extérieure de la première partie (31) de l'élément (30) d'actionnement engrène avec deux crémaillères (35, 36), qui sont montées, dans la boîte (2) du tiroir, mobiles transversalement à la direction d'enfichage et parallèlement à la plaque (3) de fond et
- **en ce que** les crémaillères (35, 36) pénètrent, lorsque le système (7) de contacts de séparation vient dans la position de fonctionnement, dans une tôle (6) de support du côté du panneau de commande pour le verrouillage du tiroir enfichable avec le panneau de commande.

5. Tiroir enfichable suivant la revendication 4,
**caractérisé en ce que**
les crémaillères (35, 36) passent dans la position de fonctionnement respectivement dans une ouverture (27) de la tôle (6) de support du côté du tableau de commande.

6. Tiroir enfichable suivant l'une des revendications précédentes,
**caractérisé en ce que**
- le coulisseau (15) à main est relié à une plaque (55) de verrouillage montée mobile transversalement à la direction d'enfichage et parallèlement à la plaque (3) de base et ayant une ouverture (23) de verrouillage,
- **en ce que** l'interrupteur (10) principal a un arbre (50) de manoeuvre ayant un levier (52) pivotant, qui y repose et qui pénètre dans un évidement d'une barre (51) de verrouillage disposée verticalement et
- **en ce que** l'interrupteur (10) principal ne peut, dans la position de fermeture du coulisseau (15) à main, être fermé que si un embout (56) inférieur de la barre (51) de verrouillage pénètre dans l'ouverture (23) de verrouillage.

7. Tiroir enfichable suivant la revendication 6,
**caractérisé en ce que**
- l'ouverture (23) de verrouillage est, dans la position de fermeture du coulisseau (15) à main, opposée à une ouverture (24) correspondante de la tôle de support et
- **en ce que** le tiroir enfichable peut, avec la tôle (6) de support, être verrouillé de manière à être empêché de sortir dans le sens contraire à la direction d'enfichage, si, lorsque l'interrupteur (10) principal est fermé, l'embout (56) inférieur de la tige (51) de verrouillage passe dans l'ouverture (23) de verrouillage et dans l'ouverture (24) de la tôle de support.

8. Tiroir enfichable suivant l'une des revendications précédentes, **caractérisé en ce que**
- au moins un levier (40, 41) d'encliquetage est monté pivotant dans une paroi (43, 44) latérale de la boîte (2) du tiroir et
- **en ce que** le levier (40, 41) d'encliquetage a un bec (58) d'encliquetage, qui, lorsque le tiroir enfichable est à l'état enfiché, s'encliquette dans une ouverture (25) de verrouillage correspondante d'une tôle (6) de support du côté du panneau de commande.

9. Tiroir enfichable suivant la revendication 8,
**caractérisé en ce que** l'axe (SA) de pivotement du levier (41, 42) d'encliquetage est perpendiculaire au plan respectif de la paroi latérale.

10. Tiroir enfichable suivant la revendication 9 en liaison avec la revendication 4 ou 5,
**caractérisé en ce que**
le levier (40, 41) d'encliquetage a une ouverture (28) de levier et
**en ce que** le levier (40, 41) d'encliquetage coopère avec la crémaillère (35, 36) de manière à pouvoir empêcher un déverrouillage du levier (40, 41) d'encliquetage par la crémaillère (35, 36) passant dans l'ouverture (28) du levier dans la position de fonctionnement.

11. Tiroir enfichable suivant l'une des revendications précédentes,
**caractérisé en ce que**
un élément d'étanchéité est disposé entre la partie (304) avant et/ou le coulisseau (15) à main.

12. Armoire de commande ayant une pluralité de casiers d'enfichage, dans lesquels des tiroirs (1) enfichables suivant l'une des revendications précédentes sont reçus avec possibilité d'en être retirés.

13. Armoire de commande suivant la revendication 12,
**caractérisée en ce que**
dans l'armoire de commande, des barres (17) omnibus sont disposées au voisinage des casiers d'enfichage, des contacts (8) de séparation d'un système (16) de contacts d'un tiroir enfichable enfiché pouvant être reliés à des barres (17) omnibus correspondantes.

14. Armoire de commande suivant la revendication 12 ou 13, **caractérisée en ce que**
- dans l'armoire de commande, sont disposées une pluralité de tôles (6) de support, un casier d'enfichage étant délimité par au moins une tôle de support, et
- **en ce que**, dans la tôle (6) de support, sont prévues des ouvertures (24, 25, 27), qui correspondent à des embouts (56) de barre de verrouillage, à des becs (58) d'encliquetage et/ou à des crémaillères (35, 36) dans les tiroirs (1) enfichables enfichés respectifs.
